# EUROPÄISCHE PATENTANMELDUNG

(11) **EP 2 113 159 A1**
(43) Veröffentlichungstag der Anmeldung: **04.11.2009**
(21) Anmeldenummer: 09005568.2
(22) Anmeldetag: 21.04.2009
(51) Int. Cl.: A01B 35/18, A01B 49/02

(54) **Grubber**

(30) Priorität: 30.04.2008 DE 102008021539
(71) Anmelder: Amazonen-Werke H. Dreyer GmbH & Co. KG, 49205 Hasbergen (DE)
(72) Erfinder: Altmann, Stefan, 04209 Leipzig (DE); Faber, Andreas, 04425 Taucha (DE); Randasch, Holger, 04229 Leipzig (DE); Thielicke, René, Dr., 04275 Leipzig (DE)

(57) **Zusammenfassung**

Grubber mit einem Grubberrahmen, der mehrere Reihen Bodenbearbeitungszinken trägt und dem eine aus Einebnungswerkzeugen und Nachlaufwalze bestehende Einheit nachgeordnet ist, wobei die Einheit über eine Gelenke aufweisende Gelenk- und Tiefeneinstellanordnung verschwenkbar gegenüber dem Grubberrahmen und an diesem angeordnet ist. Um den bisherigen Grubber hinsichtlich der Anordnung und Befestigung der dem Grubberrahmen nachgeordneten Einheit unter Beibehaltung und Verbesserung der erforderlichen Aushubkraft bei Anheben des Grubberrahmens mit der nachgeordneten Einheit wesentlich zu vereinfachen sowie für die Transportstellung die sich in Höhenrichtung ergebenden Transportabmessungen in einfacher Weise wesentlich zu reduzieren, ist vorgesehen, dass die Gelenkanordnung nur eine quer zur Arbeitsrichtung verlaufende Gelenkachse aufweist, dass die Gelenkachse mit der Schwenkachse, um welche die Einheit verschwenkbar ist, zusammenfällt, dass die einzige Gelenkachse durch die Gelenke, mit denen die Einheit am Grubberrahmen verschwenkbar angeordnet ist, verläuft.

## Beschreibung

Die Erfindung betrifft einen Grubber gemäß des Oberbegriffes des Patentanspruches 1.

Ein derartiger Grubber ist beispielsweise in der EP 05 96 259 B1 beschrieben. Dieser Grubber weist einen Grubberrahmen auf. An dem Grubberrahmen sind in mehreren Querreihen hintereinander und seitlich versetzt zueinander Bodenbearbeitungszinken angeordnet. Hinter den Bodenbearbeitungszinken sind Einebnungswerkzeuge und eine Nachlaufwalze an einem Zwischenrahmen angeordnet. Der Zwischenrahmen mit den Einebnungswerkzeugen und die Nachlaufwalze bilden eine Einheit, die über eine Parallelogrammaufhängung am Grubberrahmen verschwenkbar angeordnet ist. Aufgrund der Gelenke der Parallelogrammanordnung kann die Einheit beim Ausheben des Grubbers nach vorn-unten schwenken, so dass die Länge der Grubbereinheit reduziert wird. Hierdurch wird auch die erforderliche Hubkraft, um den Grubber auszuheben und in Transportstellung zu bringen, reduziert.

Die Parallelogrammaufhängung, mittels welcher erreicht wird, dass die Einheit zur Reduzierung der erforderlichen Aushubkraft nach vorn schwenken kann, ist aufgrund der zumindest vier erforderlichen Lenker zur Verwirklichung der Parallelogrammaufhängung einer verschwenkbaren Einheit relativ aufwendig.

Der Erfindung liegt die Aufgabe zugrunde, den bisherigen Grubber hinsichtlich der Anordnung und Befestigung der dem Grubberrahmen nachgeordneten Einheit unter Beibehaltung und Verbesserung der erforderlichen Aushubkraft bei Anheben des Grubberrahmens mit der nachgeordneten Einheit wesentlich zu vereinfachen sowie für die Transportstellung die sich in Höhenrichtung ergebenden Transportabmessungen in einfacher Weise wesentlich zu reduzieren.

Diese Aufgabe wird erfindungsgemäß dadurch gelöst, dass die Gelenkanordnung nur eine quer zur Arbeitsrichtung verlaufende Gelenkachse aufweist, dass die Gelenkachse mit der Schwenkachse, um welche die Einheit verschwenkbar ist, zusammenfällt, dass die einzige Gelenkachse durch die Gelenke, mit denen die Einheit am Grubberrahmen verschwenkbar angeordnet ist, verläuft. Infolge dieser Maßnahmen wird eine äußerst einfache Aufhängung der Einheit an dem Grubberrahmen erreicht, welche gewährleistet, dass durch die erfindungsgemäße Gelenkanordnung in einfacher Weise der Schwerpunkt des Grubbers in erheblichem Maß in Richtung seiner Aufhängung am Ackerschlepper oder an einem Tragrahmen verlagert wird. Hierdurch eine einfache Verlagerung des Schwerpunktes und eine Verkürzung der Länge des Gerätes in einfacher Weise erreicht.

Um eine vorteilhafte Lage der Gelenkachse zur Verlagerung des vorteilhaften Schwerpunktes zu erreichen, hat sich herausgestellt, dass die Gelenkachse sich zwischen den Einebnungswerkzeugen und der Nachlaufwalze befindet.

Eine vorteilhafte Anordnung der Tiefeneinstellanordnung ergibt sich bei der erfindungsgemäßen Gelenkanordnung dadurch, dass die Tiefeneinstellanordnung sich vor den Einebnungswerkzeugen befindet.

Um bereits einem geringen Ausheben des Grubbers aus dem Boden, beispielsweise beim Wenden am Feldende eine günstige Schwerpunktverlagerung durch die erfindungsgemäße Aufhängung, ist vorgesehen, dass der Grubberrahmen um eine quer zur Arbeitsrichtung verlaufende und sich in seinem vorderen Bereich befindliche Schwenkachse aus einer Arbeitsstellung nach oben in eine Zwischenstellung verschwenkbar ist, und dass beim Verschwenken des Grubberrahmens die Einheit gegenüber dem Grubberrahmen aus dessen Arbeits- in seine Zwischenstellung gegenüber dem Gruberrahmen nach unten und vorne verschwenkt.

Um beim Verbringen des Grubbers in die Transportstellung eine vorteilhafte Schwerpunktverlagerung sowie eine Verkürzung des Gerätes zu erreichen, ist vorgesehen, dass der Grubberrahmen um eine quer zur Arbeitsrichtung verlaufende und sich in seinem vorderen Bereich befindliche Schwenkachse um etwa 90° aus einer Arbeitsstellung in eine aufrechte Transportstellung verschwenkbar ist und dass beim Verschwenken des Grubberrahmens die Einheit gegenüber dem Grubberrahmen aus dessen Arbeits- in seine Transportstellung um etwa 90° gegenüber dem Gruberrahmen nach unten und vorne verschwenkt. Hier lässt sich auch für große Arbeitsbereiten eine vorteilhafte Transportstellung mit einer geringen Transporthöhe erreichen.

Um bei Grubbern mit großen Arbeitsbreiten eine vorteilhafte Schwerpunktverlagerung, sowie eine Reduzierung der Transporthöhe und eine geringe Transportbreite verwirklichen zu können, ist vorgesehen dass der Grubberrahmen in einer ersten Umstellungsphase um eine quer zur Arbeitsrichtung verlaufende und sich in seinem vorderen Bereich befindliche Schwenkachse um etwa 90° aus einer Arbeitsstellung in eine aufrechte Zwischenstellung verschwenkbar ist, so dass beim Verschwenken des Grubberrahmens die Einheit gegenüber dem Grubberrahmen aus dessen Arbeits- in seine Transportstellung um etwa 90° gegenüber dem Gruberrahmen nach unten und vorne verschwenkt, und dass zumindest die äußeren Rahmenteile der Grubberrahmen in einer zweiten Umstellungsphase um zumindest annähernd vertikale Schwenkachsen um etwa 90° aus der Zwischenstellung in seine Transportstellung verschwenkbar ist, so dass zumindest die äußeren Rahmenteile der Grubberrahmen zumindest annähernd parallel zu Fahrtrichtung ausgerichtet sind.

Weitere Einzelheiten der Erfindung sind der Beispielsbeschreibung und den Zeichnungen zu entnehmen. Hierbei zeigen
- Fig. 1: den Grubber in Arbeitsstellung, Seitenansicht und in Prinzipdarstellung,
- Fig. 2: den Grubber nach Fig. 1 in der Draufsicht und in Prinzipdarstellung,
- Fig. 3: den Grubber in Zwischenstellung, beispielsweise Vorgewendestellung in Seitenansicht und in Prinzipdarstellung,
- Fig. 4: den Grubber gemäß Fig. 5 den Grubber in Transportstellung, Seitenansicht und Prinzipdarstellung und
- Fig. 6: den Grubber gemäß Fig. 5 in der Draufsicht und in Prinzipdarstellung.

Der Grubber weist den Tragrahmen 1 mit den Laufrädern 2 und der Zugdeichsel 3 auf. An der Rückseite des Tragrahmens 1 ist der Grubberrahmen 4, der im Ausführungsbeispiel aus dem mittleren Grubberrahmen 4' und den beiden an dem mittleren Grubberrahmen 4' angeordneten seitlichen Grubberrahmen 4" besteht, angeordnet. Die seitlichen Grubberrahmen 4'' sind über Tragbalken 5 mittels einer Gelenkanordnung 6, deren Gelenkachsen in Arbeitsstellung des Grubbers in Fahrtrichtung 8 verlaufen, an dem an dem mittleren Grubberrahmen 4' zugeordneten Anbaubock 9, angelenkt. Sowohl der mittlere Grubberrahmen 4' wie die seitliche Grubberrahmen 4'' weisen jeweils mehrere Reihen von Bodenbearbeitungszinken 10 auf, die in mehreren Querreihen und seitlich versetzt und beabstandet zueinander angeordnet sind, auf. Hinter dem Grubberrahmen 4 sind jeweils Einebnungswerkzeuge 11 und eine Nachlaufwalze 12 angeordnet. In den Zeichnungen sind jeweils nur die seitlich äußeren Elemente der Nachlaufwalze 12 dargestellt.

Die Einebnungswerkzeuge 11 und die Nachlaufwalze 12 bilden jeweils eine Einheit 13, die durch einen Geräterahmen 14 miteinander verbunden sind.

Der Geräterahmen 14 der jeweiligen Einheit 13 ist mittels Gelenken 15 an dem jeweils zugeordneten Grubberrahmen 4, 4', 4'' angeordnet. Die Gelenkachsen 16 der Gelenke 15 dieser Gelenkanordnung verlaufen quer zur Fahrtrichtung 8. Des weiteren ist der jeweiligen Einheit 13 eine Tiefeneinstellungsanordnung 17, die mit dem Grubberrahmen 4, 4', 4'' zusammenwirkt, zugeordnet, um die Nachlaufwalze 12 in der Höhe gegenüber dem Bodenbearbeitungszinken 10 einzustellen, so dass über die jeweilige Nachlaufwalze 12 die Eindringtiefe der Bodenbearbeitungswerkzeuge 10 in den Boden bestimmbar ist.

Die jeweilige Einheit 13 ist um die Gelenkachse 16 der Gelenke 15, mittels welcher sie an einem Grubberrahmen 4, 4', 4'' angeordnet ist, verschwenkbar, so dass die Schwenkachse, um welche die Einheit 13 gegenüber dem Grubberrahmen 4, 4', 4'' verschwenkbar ist, mit der Gelenkachse 16 zusammenfällt. Die Gelenkachse 16, die durch die Gelenke 15 verläuft, ist die einzige Gelenkachse 16, mit denen die jeweilige Einheit 13 am Grubberrahmen 4, 4', 4'' verschwenkbar angeordnet ist.

Die Gelenkachse 16 befindet sich zwischen den Einebnungswerkzeugen 11 und der Nachlaufwalze 12, wie die Zeichnungen zeigen.

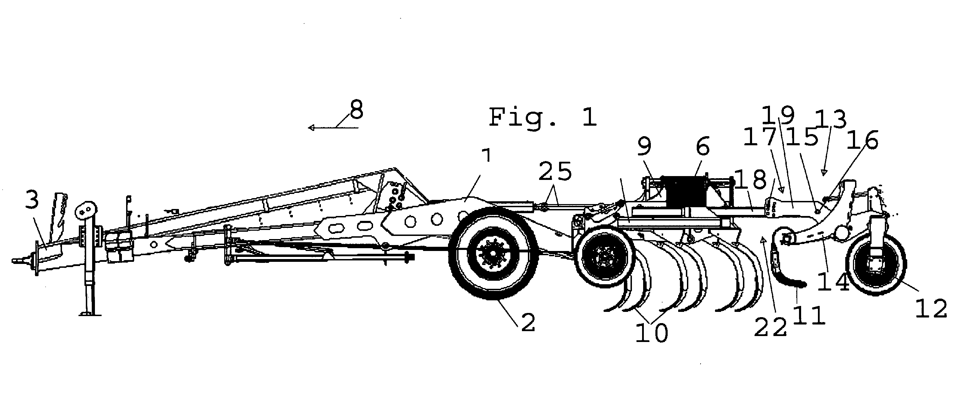

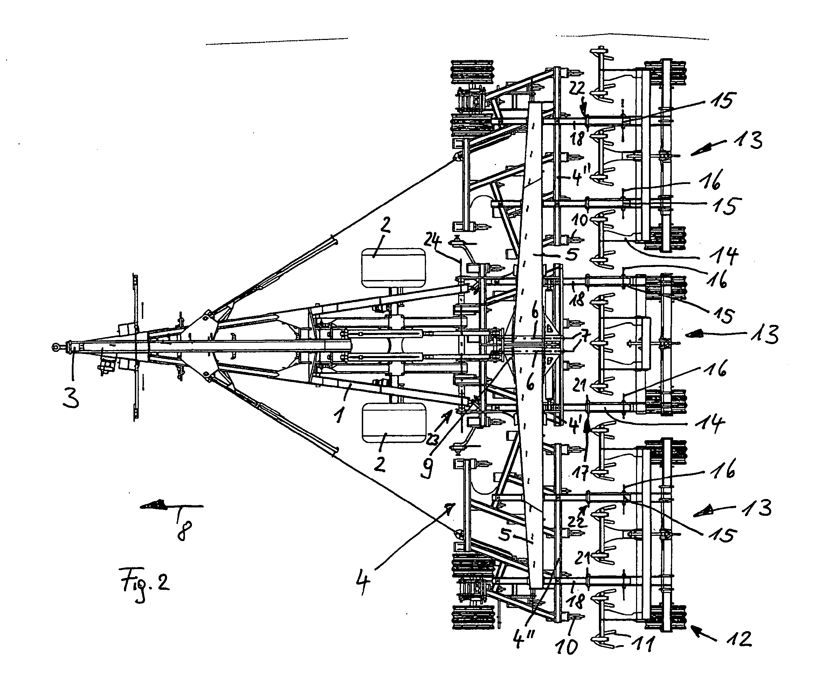

Die Tiefeneinstellanordnung 17 befindet sich vor den Einebnungswerkzeugen 11. Hierzu sind an den Rahmen 14 der jeweiligen Einheit 13 im Bereich der nach hinten ragenden Befestigungsarme 18 des Grubberrahmens 4, 4', 4'' an denen die Gelenkanordnung 15 angeordnet ist, mit zusammenwirkende Einstellarme 19 angeordnet. Hierzu ist an dem Ende der Einstellarme 19 eine als Lochreihe 20 mit einem Bolzen 21 zusammenwirkende Einstellvorrichtung 22 angeordnet. Der in die Lochreihen 20 einsteckbare Bolzen 21 kommt in Arbeitsstellung, wie Fig. 1 und 2 zeigen, an den Befestigungsarmen 18 zur Anlage.

Der jeweilige Grubberrahmen 4', 4'' ist mittels einer Gelenkanordnung 23 an dem die Tragrahmen 1 befestigt und um die durch die Gelenkanordnung 23 quer zur Arbeitsrichtung 8 verlaufende und sich in seinem vorderen Bereich befindliche Schwenkachse 24 verschwenkbar angeordnet. Zum Verschwenken der Grubberrahmen 4, 4', 4'' mit der dahinter angeordneten Einheit 13 ist zwischen dem Anbaubock 9 und dem Tragrahmen 1 die aus zwei Hydraulikzylindern 25 bestehenden motorische Verschwenkeinrichtung angeordnet.

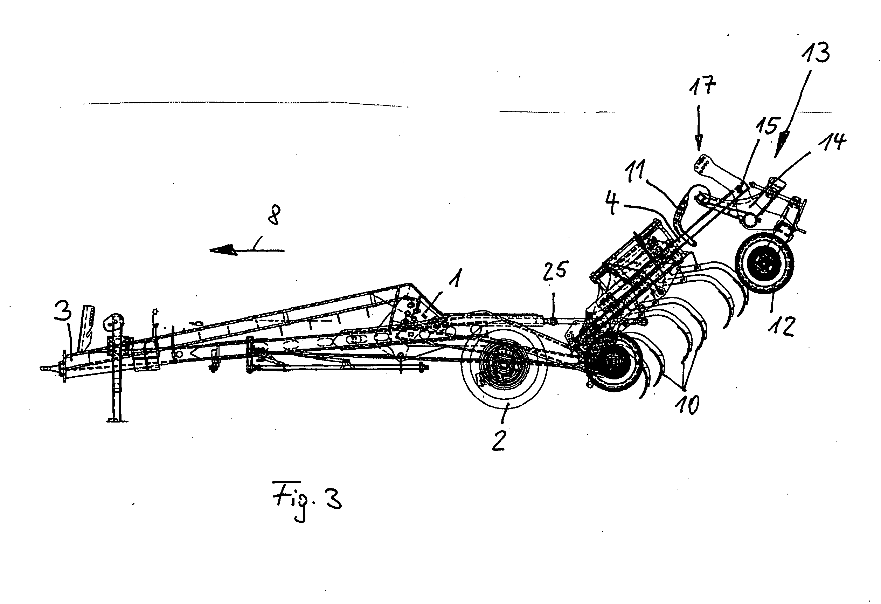

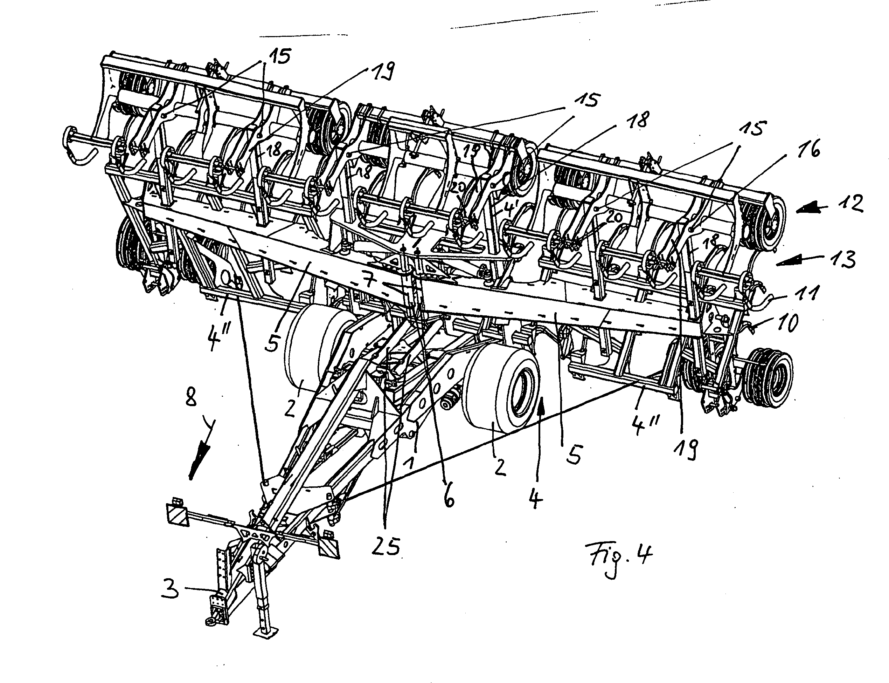

Über die motorische Schwenkeinrichtung 25 ist der Grubberrahmen 4 zusammen mit der Einheit 13 um diese quer zur Arbeitsrichtung 8 verlaufende Schwenkachse 24 aus der Arbeitsstellung gemäß Fig. 1 und 2 in die in den Fig. 3 und 4 dargestellte Zwischenstellung, z.B. zum Wenden am Feldende zu verschwenken. Bei dem Verschwenken bzw. Anheben des Grubberrahmens 4, 4', 4'' aus der Arbeitsstellung in die Zwischenstellung verschwenkt die Einheit 13 um die durch die Gelenkanordnung 15 verlaufende Schwenkachse 16 gegenüber dem Grubberrahmen 1 nach unten und vorne, wie die Fig. 4 zeigt. Hierdurch wird einerseits die Gerätelänge des Grubbers mit der Einheit 13 verkürzt und gleichzeitig wird der Schwerpunkt des Grubbers nach vorn verschoben.

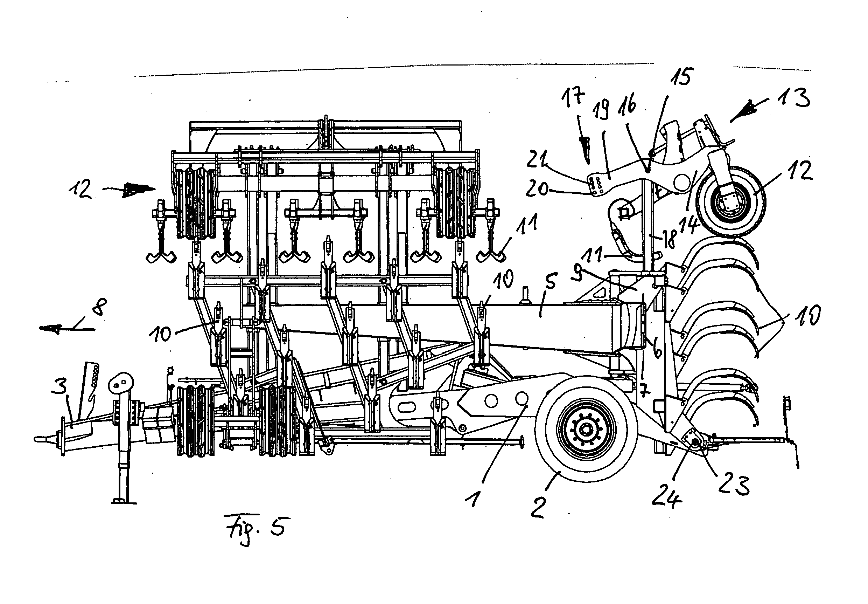

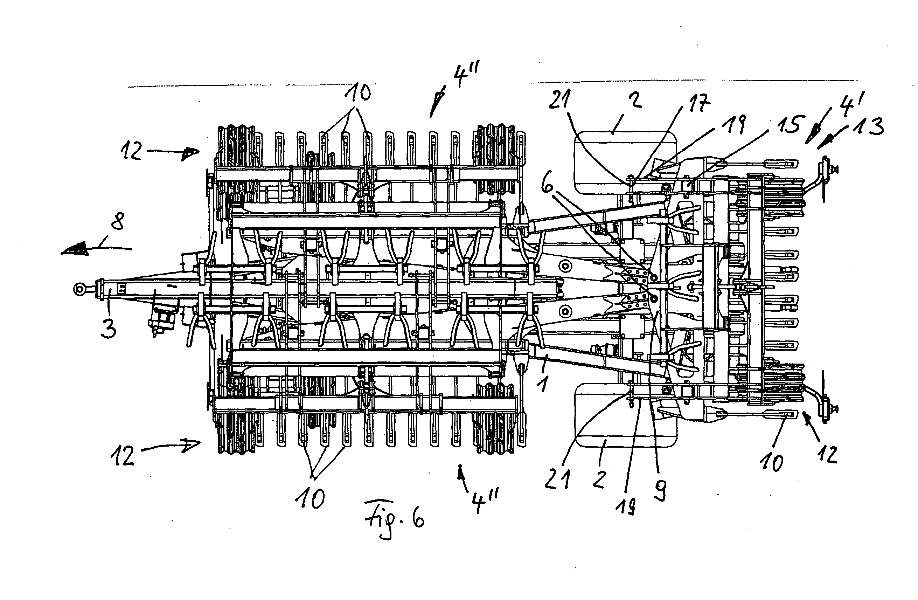

Des Weiteren kann der Grubberrahmen 4, 4', 4'' aus der in Fig. 1 und 2 dargestellten Arbeitsstellung über den Fig. 3 und 4 dargestellte Transport-Zwischenstellung um etwa 90° in die in den Fig. 5 und 6 dargestellte aufrechte Transport-Endstellung verschwenkt werden. Bei dem Verschwenken des Grubberrahmens 4, 4', 4'' verschwenkt die Einheit 13, bestehend aus Einebnungswerkzeug 11 und Nachlaufwalze 12 gegenüber dem Grubberrahmen 4, 4', 4'' aus dessen Arbeits- in seine Transportstellung um etwa 90° gegenüber dem Grubberrahmen 4, 4', 4'' nach unten und vorne. Hierdurch wird die Transporthöhe des Grubbers und während des Verschwenkens der Schwerpunkt nach vorn verlagert, so dass mit einer verringerten Aushubkraft, die von der Aushubvorrichtung 25 aufgebracht werden muss, der Grubberrahmen 4, 4', 4'' verschwenkt werden kann.

Aufgrund der großen Arbeitsbreite, d.h. dass seitlich neben dem Mittelrahmen 4' seitliche Grubberrahmen 4'' angeordnet sind, wird nach der ersten Umstellungsphase, wenn der gesamte Grubberrahmen 4, bestehend aus Grubberrahmen 4', und Seitenrahmen 4'' um die quer zur Arbeitsrichtung 8 verlaufende und sich in seinem vorderen befindliche Schwenkachse 24 um etwa 90° aus seiner Arbeitsstellung in eine aufrechte Transport-Zwischenstellung verschwenkt wird. Somit wird beim Verschwenken des Grubberrahmens 4 die Einheit 13 gegenüber dem Grubberrahmen 4 aus dessen Arbeits- in Transportstellung um etwa 90° gegenüber dem Grubberrahmen 4 nach unten und vorne verschwenkt, wie Fig. 5 am Beispiel des Mittelrahmens 4' zeigt. In einer zweiten Umstellungsphase werden die äußeren Rahmenteile 4'' des Grubberrahmens 4 bei der nach der ersten Umstellungsphase aufrecht verlaufenden Gelenkachsen der Gelenke 6 um 90° aus der Transport-Zwischenstellung in ihre Transport-Endstellung verschwenkt, so dass die äußeren Rahmenteile 4'' des Grubberrahmens 4 zumindest annähernd in Fahrtrichtung 8 ausgerichtet sind, wie die Fig. 5 und 6 zeigen.

## Patentansprüche

1. Grubber mit einem Grubberrahmen, der mehrere Reihen Bodenbearbeitungszinken trägt und dem eine aus Einebnungswerkzeugen und Nachlaufwalze bestehende Einheit nachgeordnet ist, wobei die Einheit über eine Gelenke aufweisende Gelenk- und Tiefeneinstellanordnung verschwenkbar gegenüber dem Grubberrahmen und an diesem angeordnet ist, **dadurch gekennzeichnet, dass** die Gelenkanordnung (15) nur eine quer zur Arbeitsrichtung (8) verlaufende Gelenkachse (16) aufweist, dass die Gelenkachse (16) mit der Schwenkachse, um welche die Einheit (13) verschwenkbar ist, zusammenfällt, dass die einzige Gelenkachse (16) durch die Gelenke (15), mit denen die Einheit (13) am Grubberrahmen (4, 4', 4 ") verschwenkbar angeordnet ist, verläuft.

2. Grubber nach Anspruch 1, **dadurch gekennzeichnet, dass** die Gelenkachse (16) sich zwischen den Einebnungswerkzeugen (11) und der Nachlaufwalze (12) befindet.

3. Grubber nach einem oder mehreren der vorstehenden Ansprüche, **dadurch gekennzeichnet, dass** die Tiefeneinstellanordnung (17) sich vor den Einebnungswerkzeugen (11) befindet.

4. Grubber nach einem oder mehreren der vorstehenden Ansprüche, **dadurch gekennzeichnet, dass** der Grubberrahmen (4, 4', 4'') um eine quer zur Arbeitsrichtung (8) verlaufende und sich in seinem vorderen Bereich befindliche Schwenkachse (24) aus einer Arbeitsstellung nach oben in eine Transport-Zwischenstellung verschwenkbar ist und dass beim Verschwenken des Grubberrahmens (4, 4', 4'') die Einheit (13) gegenüber dem Grubberrahmen (4, 4', 4'') aus dessen Arbeits- in seine Zwischenstellung gegenüber dem Gruberrahmen (4, 4',4'') nach unten und vorne verschwenkt.

5. Grubber nach einem oder mehreren der vorstehenden Ansprüche, **dadurch gekennzeichnet, dass** der Grubberrahmen (4, 4',4'') um eine quer zur Arbeitsrichtung (8) verlaufende und sich in seinem vorderen Bereich befindliche Schwenkachse (24) um etwa 90° aus einer Arbeitsstellung in eine aufrechte Transport-Endstellung verschwenkbar ist und dass beim Verschwenken des Grubberrahmens (4, 4', 4'') die Einheit (13) gegenüber dem Grubberrahmen (4, 4', 4'') aus dessen Arbeits- in seine Transportstellung um etwa 90° gegenüber dem Gruberrahmen nach unten und vorne verschwenkt.

6. Grubber nach einem oder mehreren der Ansprüche 1 bis 4, **dadurch gekennzeichnet, dass** der Grubberrahmen (4, 4', 4'') in einer ersten Umstellungsphase um eine quer zur Arbeitsrichtung (8) verlaufende und sich in seinem vorderen Bereich befindliche Schwenkachse (24) um etwa 90° aus einer Arbeitsstellung in eine aufrechte Transport-Zwischenstellung verschwenkbar ist, so dass beim Verschwenken des Grubberrahmens (4, 4', 4'') die Einheit (13) gegenüber dem Grubberrahmen (4, 4', 4'') aus dessen Arbeits- in seine Transportstellung um etwa 90° gegenüber dem Gruberrahmen (4, 4', 4'') nach unten und vorne verschwenkt, und dass zumindest die äußeren Rahmenteile (4'') der Grubberrahmen (4) in einer zweiten Umstellungsphase um zumindest annähernd vertikale Schwenkachsen (7) um etwa 90° aus der Transport-Zwischenstellung in seine Transport-Endstellung verschwenkbar ist, so dass zumindest die äußeren Rahmenteile (4'') der Grubberrahmen (4) zumindest annähernd parallel zu Fahrtrichtung (8) ausgerichtet sind.
